(19) Europäisches Patentamt / European Patent Office / Office européen des brevets

(11) **EP 2 425 588 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**12.02.2020 Patentblatt 2020/07**

(45) Hinweis auf die Patenterteilung:
**15.03.2017 Patentblatt 2017/11**

(21) Anmeldenummer: **10720371.3**

(22) Anmeldetag: **27.04.2010**

(51) Int Cl.:
*H04L 12/40* (2006.01)     *H02J 5/00* (2016.01)
*H01R 9/26* (2006.01)

(86) Internationale Anmeldenummer:
**PCT/EP2010/055600**

(87) Internationale Veröffentlichungsnummer:
**WO 2010/125048 (04.11.2010 Gazette 2010/44)**

(54) **SYSTEM ZUR BERÜHRUNGSLOSEN ENERGIE- UND DATENVERSORGUNG VON BUSTEILNEHMERMODULEN**

SYSTEM FOR SUPPLYING BUS SUBSCRIBER MODULES WITH CONTACTLESS ENERGY AND DATA

SYSTÈME D'ALIMENTATION EN ÉNERGIE ET EN DONNÉES SANS CONTACT DE MODULES D'ABONNÉS DE BUS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **29.04.2009 DE 102009003846**

(43) Veröffentlichungstag der Anmeldung:
**07.03.2012 Patentblatt 2012/10**

(73) Patentinhaber: **Weidmüller Interface GmbH & Co. KG**
**32758 Detmold (DE)**

(72) Erfinder:
• **WESEMANN, Derk**
**32657 Lemgo (DE)**
• **WITTE, Stefan**
**32425 Minden (DE)**
• **MICHELS, Jan Stefan**
**33102 Paderborn (DE)**
• **GRIESE, Björn**
**33102 Paderborn (DE)**
• **SCHMIDT, Hans-Peter**
**91242 Ottensoos (DE)**
• **SÖLLNER, Matthias**
**95652 Waldsassen (DE)**

(74) Vertreter: **Specht, Peter et al**
**Loesenbeck - Specht - Dantz**
**Patent- und Rechtsanwälte**
**Am Zwinger 2**
**33602 Bielefeld (DE)**

(56) Entgegenhaltungen:
EP-A1- 1 739 804     EP-A1- 1 885 085
EP-A2- 2 073 315     DE-A1- 10 203 765
DE-A1- 19 600 997     DE-A1- 19 640 367
DE-U1- 29 624 219     US-A1- 2008 303 351

EP 2 425 588 B2

# EP 2 425 588 B2

**Beschreibung**

Die Erfindung betrifft ein System zur berührungslosen Energie- und Datenversorgung nach dem Oberbegriff des Anspruchs 1.

Es ist bekannt, mittels elektromagnetischer Induktion Nachrichtensignale und ggf. auch Energie von einer Sender- zu einer Empfängereinheit gemeinsam oder getrennt kontaktlos zu übertragen. Nach einer Variante erfolgt dabei eine induktive Übertragung mit Hilfe eines hochfrequenten Magnetfeldes von einer Primärspule (Sender) zu einer Sekundärspule (Empfänger). Es ist ferner auch bekannt, Energie und Daten kapazitiv zwischen zwei Schaltkreisen zu übertragen. Die stark abstandsabhängige kapazitive Kopplung nimmt mit wachsender Frequenz zu.

Zum technologischen Hintergrund werden die DE 102 03 765 B4, die DE 100 26 174 A1 und die US 2001/0024888A1 genannt

In der EP 1 885 085 A1 wird vorgeschlagen, Busteilnehmermodule eines Datenbusses mittels einer induktiven Übertragung berührungslos mit elektrischer Energie zu versorgen und auf diese Weise Daten zu übertragen.

Die Lösung der EP 1 885 085 A1 ist insofern zu wenig flexibel, als sie erfordert, dass die Busteilnehmer und die zugehörige Montagebasis an genau aufeinander abgestimmten Steckplätzen zusammengesetzt werden. Damit ist es aber nur noch möglich, Elektronikgehäuse einer vorgegebenen Baubreite an die Montagebasis anzukoppeln. Ein weiteres Problem ist, dass hierdurch feste Rastpunkte vorgegeben sind.

Die Lösung dieses Problems ist eine erste Aufgabe der Erfindung.

Die Erfindung löst diese Aufgabe durch den Gegenstand des Anspruchs 1.

Besonders derart wird mit geringem Bauteileaufwand ein optimiertes System geschaffen, bei dem eine Montageschiene - eine Tragschiene - mittels einer ergänzenden Versorgungsschiene der beschriebenen Art zur berührungslosen Daten- und Energie-Übertragung genutzt wird.

Besonders einfach und kostengünstig lässt sich die Erfindung dadurch realisieren, dass die Montageschiene als Tragschiene mit einem hutförmigen Querschnitt ausgestaltet Ist. auf welcher die Busteilnehmermodule arretierbar und vorzugsweise rasterfrei aneinander reihbar sind und welche einen Freiraum aufweist, wobei die Versorgungsschiene zumindest teilwelse in den Freiraum Integriert, vorzugsweise eingesetzt ist. Dabei ist es denkbar, die Versorgungsschiene als separates Element vorzugfertigen und sie als quasi vormontierte Einheit als Ganzes an der Tragschiene zu fixieren, insbesondere in den Freiraum der Tragschiene einzukleben und/oder einzurasten und/oder einzuklemmen und/oder einzuschrauben.

Da die Tragschiene oder eine Busschiene in der Tragschiene nicht von bewegten Teilen kontaktiert wird, ist die Ausfallsicherheit - insbesondere wenn nur passive Bauelemente in der Schiene vorhanden sind - relativ groß und der Verschleiß ist relativ gering.

Die Tragschiene ist prinzipiell für eine freie Positionierbarkeit der aufgerasteten Module geeignet. Es ist besonders vorteilhaft, dass die Busteilnehmermodule auf der Tragschiene in deren Haupterstreckungsrichtung rasterlos frei positionierbar sind, da diese Ausgestaltung das System besonders flexibel macht.

Erfindungsgemäß erfolgt die Energie-Übertragung induktiv und die Daten-Übertragung kapazitiv. Diese Variante erlaubt es, je nach Aufgabe die passende Übertragungsform - induktiv oder kapazitiv - zu wählen.

Es erfolgt die Energieübertragung induktiv und die Datenübertragung kapazitiv, da diese Übertragungsform für diese Variante besonders gut geeignet ist.

Nach einer Weiterbildung der Erfindung ist vorgesehen, dass die Busteilnehmermodule eine Aussparung aufweisen, in welche ein Vorsprung an der Versorgungsschiene im auf der Tragschiene montierten Zustand eingreift. Der Vorsprung sollte dann über den Freiraum der Tragschiene so vorstehen, dass ein Aufsetzen von nicht zu dem System gehörigen Modulen nach Art einer mechanischen Kodierung mit hoher Wahrscheinlichkeit verhindert wird.

Es ist es besonders vorteilhaft, dass die primärseitige Induktivität(en) der Energie-Übertragungsschnittstelle und/oder die Daten-Übertragungsschnittstelle jeweils zur Energie- und Daten-Übertragung zu mehreren der sekundärseitigen Induktivitäten der Busteilnehmermodule ausgelegt sind. Hieran ist besonders vorteilhaft, dass Limitierungen, wie sie sich im Stand der Technik durch das vorgesehen feste Steckraster für die Busteilnehmermodule ergeben, entfallen. Die Busteilnehmermodule können vielmehr auf der Tragschiene frei positioniert werden. Sie können zudem eine unterschiedliche Breite in der Haupterstreckungsrichtung der Tragschiene aufweisen und ggf. eine unterschiedliche Bautiefe senkrecht zur Tragschiene. Gerade die induktive Versorgung mehrerer Busteilnehmer mit Energie erscheint derart besonders gut realisierbar.

Die Daten-Übertragungsschnittstelle weist eine Elektrode, einen Streifenleiter, auf, welcher zur kapazitiven Daten-Übertragung von mehreren sekundärseitigen Elektroden der Busteilnehmermodule ausgelegt ist. Hier ergibt sich ein besonders einfacher Aufbau mit dem Vorteil der Möglichkeit zum rasterfreien Anordnen der Module.

Die Erfindung schafft auch ein Verfahren zum Betreiben eines Systems nach einem der vorstehenden Ansprüche, welches sich dadurch auszeichnet, dass mit der Steuerungsvorrichtung die Anzahl der auf die Tragschiene aufgesetzten Busteilnehmermodule aus wenigstens einem ermittelbaren physikalischen Parameter bei der Energie- und/oder Daten-Übertragung ermittelt wird und dass das System in Abhängigkeit der Anzahl von auf die Tragschiene aufgesetzten Bustelinehmermodulen geregelt wird. Dieses Verfahren erlaubt es ggf. das System in Abhängigkeit von der Anzahl der Busteilnehmer optimal einzustellen. Es handelt sich um eine vorteilhafte - nicht aber in jedem Fall zwingende - Weiterbildung der Erfindung.

Es ist ferner möglich, ein Verfahren zum Betreiben eines Systems nach einem der aus das System bezogenen Ansprüche zu realisieren, bei welchem mit der Steuerungsvorrichtung der absolute Ort der auf die Tragschiene aufgesetzten Bustelinehmermodulen ermittelt wird, was insbesondere zur Adressvergabe nutzbar ist.

Vorteilhafte Ausgestaltungen der Erfindung sind den Unteransprüchen zu entnehmen.

Zusammenfassend ergeben sich erfindungsgemäß folgende zu erwähnende Vorteile sind

- eine relativ freie Positionierbarkeit der Funktionsmodule;
- damit einhergehend ein reduzierter Installationsaufwand;
- eine einfache Wartung;
- ein geringer Verschleiß;
- eine einfache Möglichkeit zur Realisierung hoher Schutzklassen;
- es sind ggf. Zusatzinformationen wie Position und/oder Reihenfolge der Busteilnehmermodule ermittelbar;
- es ist bestehendes Installationsmaterial verwendbar;
- es ist eine Einsetzbarkeit an bewegten Objekten gegeben.

Vorzugsweise ist die Anzahl an Modulen pro Kombination aus Gatewaymodul und diesem nachgeschalteten Energie- und Daten-Übertragungseinrichtungen nicht höher als 30.

Es ist ferner vorzugsweise vorgesehen, dass die Nennleistung pro Busteilnehmermodul 0 bis 20 W im Niederspannungsbereich <42V beträgt und dass weniger als alle 2 msec, vorzugsweise alle "1 msec" ein Systemabbild am Gatewaymodul verfügbar ist.

Es ist ein modularer Aufbau der Versorgungsschiene denkbar, bei dem die Datenübertragung per Kabel, zwecks Energieversorgung aber eine separate Einspeisung je Modul erfolgt

Es ist denkbar, dass je Modul der Versorgungsschiene eine eigene Spule / Induktivität aufgebaut sein kann oder eine einzelne Induktivität für die gesamte Versorgungsschiene, die sich über alle Module erstreckt.

Es ist auch eine kontaktfreie (kapazitive / induktive) Kopplung zwischen zwei Versorgungsmodulen denkbar anstelle einer Übertragung von Modul zu Modul per Kabel.

Es ist zudem auch eine kontaktlose Einkopplung zwischen Gateway / Generator und Versorgungsschiene denkbar.

Weitere vorteilhafte Ausgestaltungen sind den übrigen Unteransprüchen zu entnehmen.

Nachfolgend werden Ausführungsbeispiele unter Bezug auf die Zeichnung näher beschrieben. Es zeigt:

Fig. 1 eine perspektivische Ansicht einer Tragschiene mit einer in die Tragschiene eingesetzten Versorgungsschiene;

Fig. 2 eine schematische Darstellung des Aufbaus eines Busteilnehmermoduls und dessen Ankopplung an eine Tragschiene mit einer Versorgungsschiene;

Fig. 3 eine schematische Darstellung des Aufbaus eines Gatewaymoduls und dessen Ankopplung an eine Energie- und Daten-Übertragungseinrichtung und an eine übergeordnete Busebene;

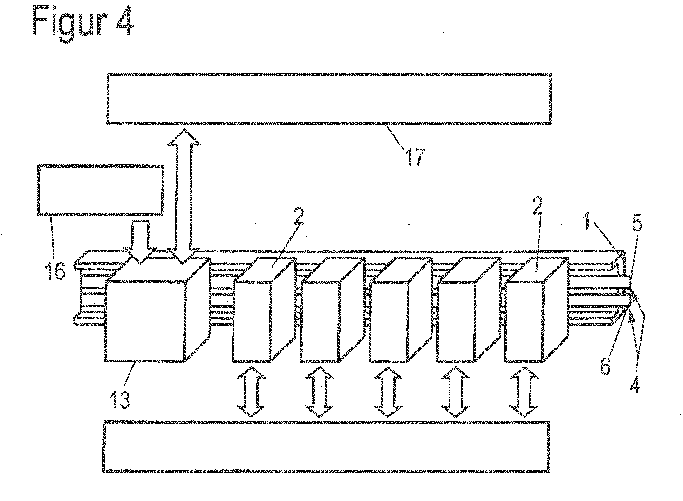

Fig. 4 eine Prinzipdarstellung des Aufbaus eines Systems zur berührungslosen Energie- und Daten-Übertragung für Busteilnehmermodule auf einer Tragschiene;

Fig. 5 ein Prinzipschaltbild, welches die Funktion einer induktiv arbeitenden Energiekopplung und einer kapazitiven Datenkopplung zwischen Tragschiene und Busteilnehmermodul veranschaulicht;

Fig. 6 bis 10 weitere Prinzipsskizzen und Prinzipschaltbilder, welche die Funktion einer induktiv arbeitenden Energiekopplung bzw. einer kapazitiven Datenkopplung zwischen Tragschiene und Busteilnehmermodul veranschaulichen;

Fig. 11,12 perspektivische Ansichten von Tragschienen mit einer Versorgungsschiene mit Busteilnehmermodulen;

Fig. 13 eine weitere perspektivische Ansicht einer Tragschiene mit einer Energie- und Daten-Übertragungsschnittstelle;

Fig. 14a, b eine perspektivische Ansicht und einen Schnitt durch eine vereinfacht dargestellte Anordnung aus einer

# EP 2 425 588 B2

Tragschiene mit einer Versorgungsschiene mit einer induktiven Energie-Übertragungsschnittstelle und mit einer kapazitiven Daten-Übertragungsschnittstelle und mit einem Busteilnehmermodul mit analogen Schnittstellen;

Fig. 15 einen Schnitt durch eine Versorgungsschiene mit einer Energie- oder Daten-Übertragungsschnittstelle und mit Busteilnehmermodulen in vereinfachter Darstellung;

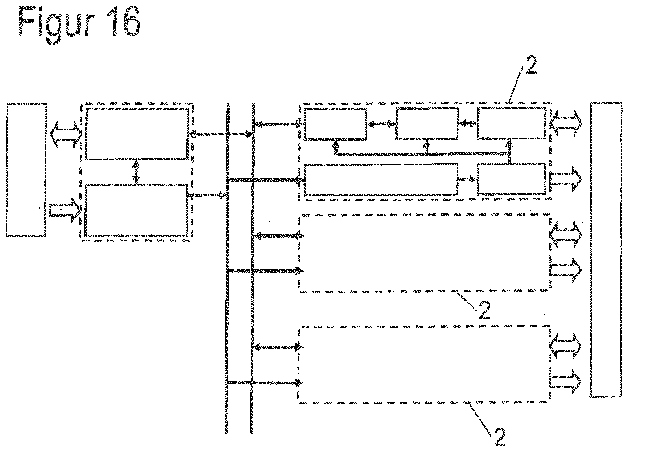

Fig. 16 eine Schaltskizze eines Systemaufbaus für einen kapazitiven Datenbus;

Fig. 17 eine schematische Darstellung einer Verlängerung von Versorgungsschienen mit Hilfe von Kabeln;

Fig. 18, 19 Varianten von Systemen mit einer induktiven Energie- und einer kapazitiven Datenübertragung;

Fig. 20 - 22 Schaltungsvarianten zu einer Positionsbestimmung;

Fig. 23 eine Prinzipdarstellung einer Positionsbestimmung über eine ortsveränderlichen Kapazität; und

Fig. 24, 25 Diagramme, welche Simulationsergebnisse für eine Ortsbestimmung veranschaulichen;

Fig. 26, 27 Skizzen von Komponenten eines weiteren Systemaufbaus.

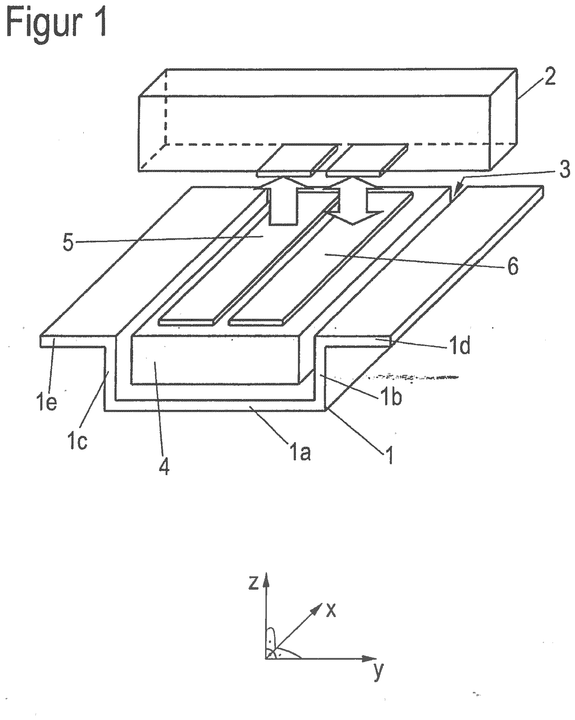

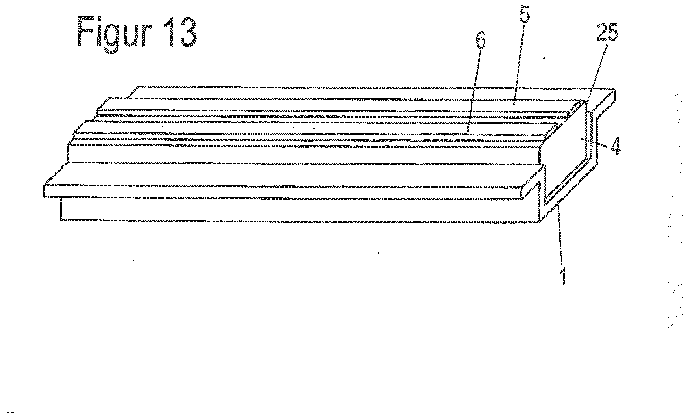

Die Fig. 1 und 6, 7, 9 bis 13, 14a, 15 sind nicht erfindungsgemäß, erläutern aber Details.

Fig. 1 zeigt eine perspektivische Ansicht einer hutörmigen Tragschiene 1, die eine u-förmige Basis mit einem Grundschenkel 1a und zwei hierzu senkrecht ausgerichteten Seitenschenkel 1b, 1c aufweist sowie zwei senkrecht von den Seitenschenkeln 1b, 1c abstehende und sich in voneinander abgewandt welsende Richtungen erstreckende Randschenkel 1d, 1e.

Bekannterweise werden die Randschenkel 1d, 1e dazu verwendet, auf der Tragschiene 1 Elektronikgehäuse oder dgl. zu befestigen, die zu diesem Zweck in der Regel einen entsprechenden Rastfuß aufweisen (hier nicht dargestellt), mit dem sie die Randschenkel 1d, 1e umgreifen.

Auf die Tragschiene 1 werden verschiedene Module aufgesetzt, insbesondere aneinander in Haupterstreckungsrichtung X der Tragschiene 1 anreihbare Busteilnehmermodule 2.

Im vorliegenden Fall sind die Busteilnehmermodule 2 mit Elektronikgehäusen versehen, die dazu ausgelegt sind, nach Art von Reihenklemmen auf die Randschenkel 1d, 1e der Tragschiene 1 aufgerastet und auf dieser aneinander gereiht zu werden.

An der Tragschiene 1 - vorzugsweise in dem u-förmigen Freiraum 3 zwischen dem Grundschenkel 1a und den Seitenschenkeln 1b, 1c- ist wenigstens eine Versorgungsschiene 4 angeordnet oder ausgebildet. Vorzugsweise handelt es sich um eine in den Freiraum eingeklebte oder eingeklemmte Versorgungsschiene 4.

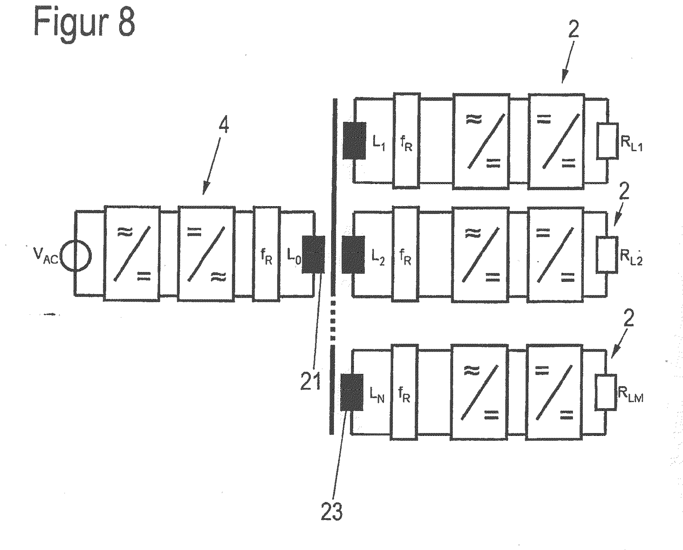

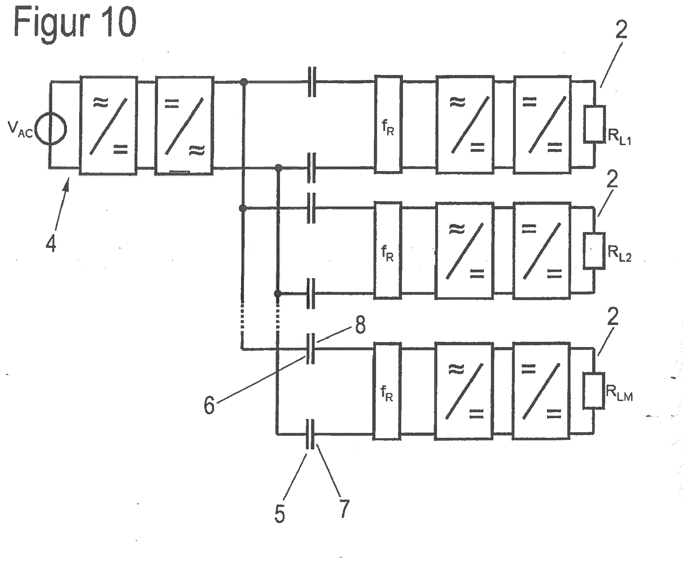

Die Versorgungsschiene 4 weist wenigstens eine kapazitive oder induktiv wirkende Energie-Übertragungsschnittstelle 5 und eine kapazitiv oder induktiv wirkende Daten-Übertragungsschnittstelle 6 auf (siehe Fig. 8 und 10).

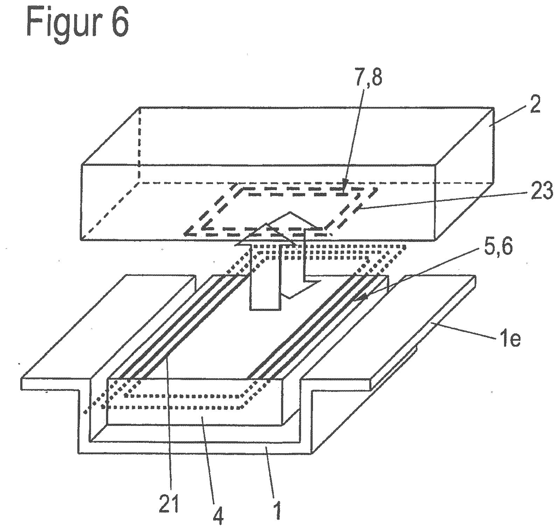

Nach Fig. 6 sind die primärseitigen Schnittstellen 6, 7 zur Energie- und Datenübertragung in einer primärseitigen Induktivität und einer sekundärseitigen Induktivität 24 zusammengefasst, was teile und Bauraum spart.

Vorzugsweise weist die Versorgungsschiene ferner einen länglichen Basiskörper auf, der in den Raum 3 eingelegt ist und sich in dem Raum 3 längs der Haupterstreckungsrichtung X der Tragschiene 1 erstreckt, an welchem die kapazitive oder induktiv wirkende Energie-Übertragungsschnittstelle 5 - zumindest eine Induktivität - oder die kapazitiv oder induktiv wirkende Daten-Übertragungsschnittstelle 6 - zumindest eine Elektrode - angeordnet ist.

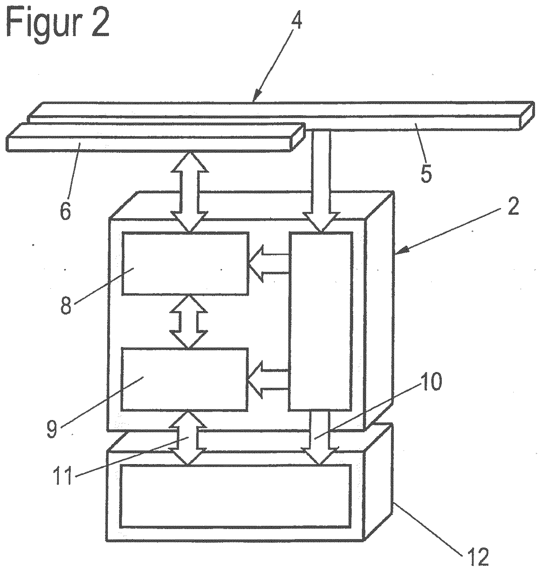

Jedes Busteilnehmermodul 2 weist entsprechend zu Fig. 2 eine korrespondierende kapazitiv oder induktiv wirkende Energie-Übertragungsschnittstelle 7 und eine korrespondierende kapazitiv oder induktiv wirkende Daten-Übertragungsschnittstelle 8 auf.

Die Schnittstellen 5 bis 8 liegen sich vorzugsweise an den einander zugewandten Seiten der Versorgungsschiene 4 und der Busteilnehmermodule 2 gegenüber.

Jedes Busteilnehmermodul 2 ist ferner mit einem Mikrocontroller 9 versehen, der mit der Energie-Übertragungsschnittstelle 7 und der Daten-Übertragungsschnittstelle 8 verbunden ist. Jedes Busteilnehmermodul 2 weist ferner einen oder mehrere Anschlüsse 10, 11 (bzw. Schnittstellen) insbesondere zum Anschluss externer Feldgeräte 12 wie Aktoren, Sensoren, Initiatoren und dgl. insbesondere über elektrische oder optische Leitungen/Kabel auf, um diese mit Energie zu versorgen und/oder diesen Daten zu senden und/oder um von diesen Signale oder Daten zu empfangen, ggf. zu verarbeiten und um ggf. Daten zurück zu einem Gatewaymodul 13 zu übertragen. Die Busteilnehmermodule weisen ferner zumindest die Elektronik auf, welche notwendig ist, um eine vollständige Empfangseinheit und - falls Daten zurück gesendet werden sollen - eine Sendeeinheit für Daten - zu bilden (siehe Fig. 8 und 10).

Das Gatewaymodul 13 ist vorzugsweise über eine oder mehrere elektrische Leitung(en)(Kabel) mit der Versorgungsschiene 4 verbunden und an die Induktivität/Kapazität auf der Versorgungsschiene 4 angeschlossen. Das Gatewaymodul 13 kann ferner elektrischen und/oder elektronischen Bauelemente aufweisen, die weiter zur Realisierung einer Sendeeinheit oder einer kombinierten Sende- und Empfangseinheit bzw. -vorrichtung notwendig sind (Fig. 8 und 10, so Gleich- und Wechselrichter, Kondensatoren usw.). Es wäre aber auch denkbar, diese Komponenten direkt in die Versorgungsschiene 4 zu integrieren und diese mit einer Gatewayfunktion auszustatten.

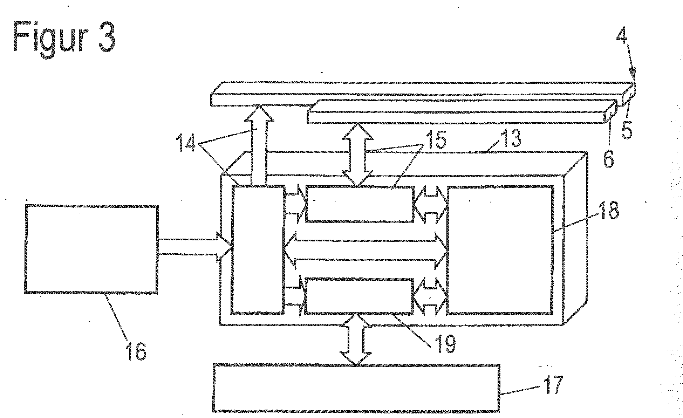

Das Gatewaymodul 13 - siehe Fig. 3 - weist insofern eine drahtgebundene Energie-Übertragungsschnittstelle 14 und eine korrespondierende drahtgebundene (oder evtl. auch kapazitiv oder induktiv wirkende) Daten-Übertragungsschnittstelle 15 auf.

Das Gateway 13 dient insbesondere der Einkopplung von Energie von einer externen Energiequelle 16 wie einem Netzgerät über die Energie-Übertragungsschnittstelle 14 in die Energie-Übertragungsschnittstelle 5 und der Datenkommunikation mit einer übergeordneten Busebene 17, die beispielsweise eine SPS aufweisen kann. Das Gatewaymodul 13 weist ebenfalls einen Mikrocontroller 18 auf, der hier an die Energie-Übertragungsschnittelle 14 sowie die Daten-Übertragungsschnittstelle 15 sowie an eine Busebenen-Schnittstelle 19 angeschlossen ist.

Nach einer besonders bevorzugten Variante der Erfindung ist die Energie- und/oder die Daten-Übertragungsvorrichtung aus den Bauelementen des Gateways 13, die zum Empfang und Senden notwendig sind und der Versorgungsschiene 4 dazu ausgelegt, dass an sie mehr als ein Busteilnehmermodul angekoppelt werden kann.

Dazu ist zumindest eines der Elemente oder sind beide Elemente Energie- und Daten-Übertragungsschnittstelle 5, 6 der Versorgungsschiene 4 dazu ausgelegt, dass an sie mehr als eines der Busteilnehmermodule 2, insbesondere mehrere der Busteilnehmermodule 3, angekoppelt werden können.

Nach einer ganz besonders bevorzugten Variante der Erfindung ist zumindest eines der Elemente oder sind beide Elemente Energie- und Daten-Übertragungsschnittstelle 5, 6 sogar dazu ausgelegt, dass an sie sämtliche Busteilnehmermodule 2 der Tragschiene 1 angekoppelt werden können.

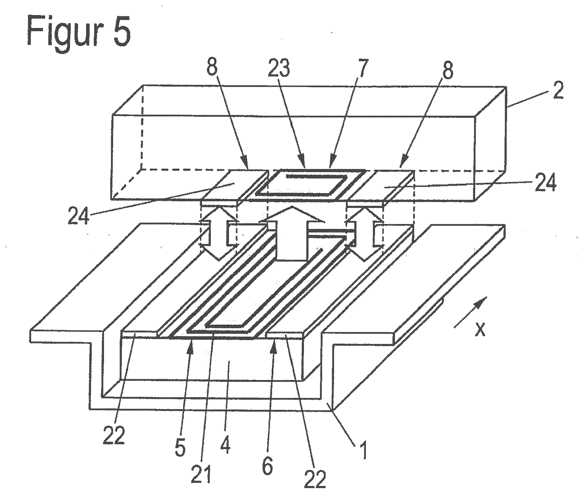

Vorzugsweise sind die Energie-Übertragungsschnittstelle 5 und die Daten-Übertragungsschnittselle 6 kapazitiv oder induktiv wirkend ausgelegt, sie weisen dabei vorzugsweise jeweils entsprechend wenigstens eine Primär-Induktivität 21 (Spule) oder eine Primär-Elektrode (einen Streifenleiter oder eine metallische Platte oder Beschichtung oder dgl.) einer Kapazität (Kondensator) auf (siehe Fig. 5). In Fig. 5 ist beispielhaft die Induktivität 21 dazu ausgelegt, als primärseitige Energie-Übertragungsschnittstelle 5 genutzt zu werden und die Streifenleiter 22 dienen als primärseitige Daten-Übertragungsschnittstelle 6.

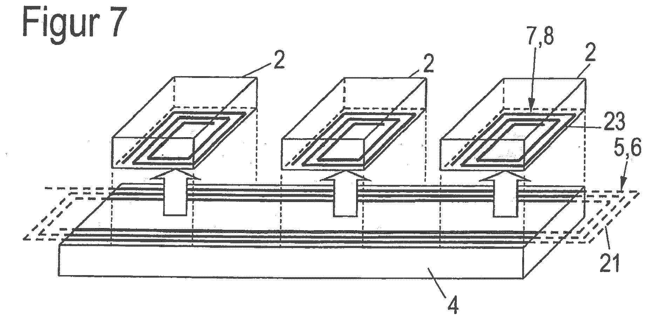

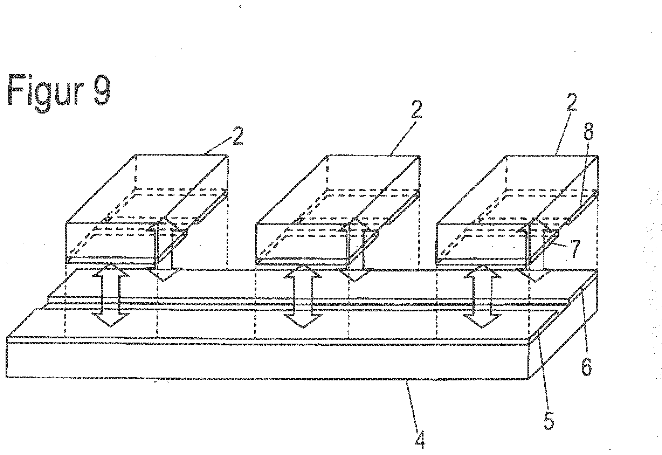

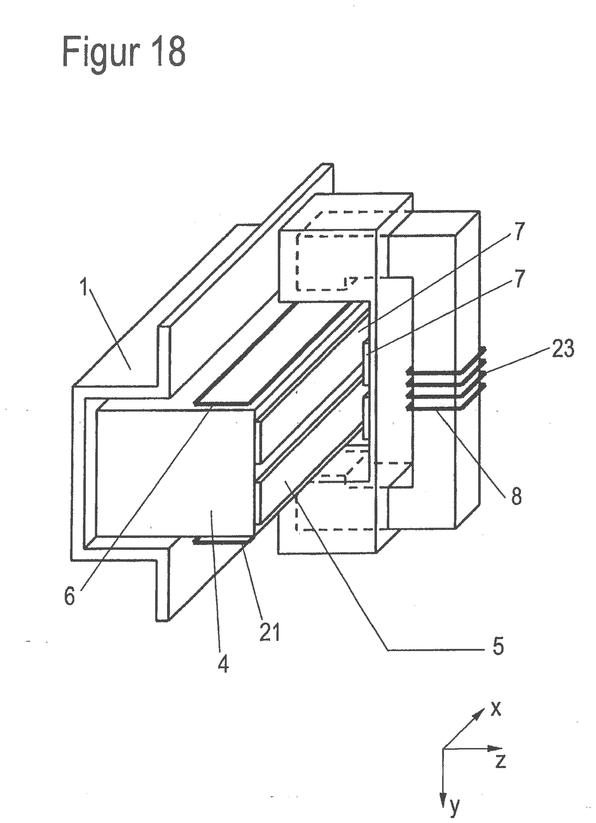

Wie in Fig. 5 zu erkennen, erstrecken sich die Elemente 21, 22 jeweils in der Haupterstreckungsrichtung X über eine größere Strecke als die einzelnen Busteilnehmermodule 2 bzw. deren Energie- und Daten-Übertragungsschnittstelle 6 (Sekundär-Elektrode 24; siehe Fig. 9 oder Sekundär-Induktivität 23; Fig. 7). Dies ist prinzipiell auch aus Fig. 18 ersichtlich.

Die Erfindung weicht in diesem Punkt deutlich von dem bisherigen Trend ab, je Busteilnehmermodul jeweils eine eigene Energie- und Daten-Übertragungsvorrichtung vorzusehen bzw. jeweils eine eigene Induktivität oder eine eigene Kapazität.

Diese geänderte Ausgestaltung hat viele Vorteile.

So ist es offensichtlich, dass es die Ausgestaltung der Fig. 5 ohne weiteres ermöglicht, die einzelnen Busteilnehmermodule in Haupterstreckungsrichtung X der Tragschiene 1 an einem beliebigen Ort in Haupterstreckungsrichtung X aufzusetzen. Es ist nicht notwendig, wie beim Stand der Technik irgendein vorgegebenes Raster einzuhalten. Dies ermöglicht es auch, Busteilnehmermodule 2 mit in Haupterstreckungsrichtung X verschiedener Breite einzusetzen.

Zudem wird in Hinsicht auf die Energie- und Daten-Übertragungsvorrichtung der bauliche und konstruktive Aufwand verringert, da weniger Primärinduktivitäten (Spulen) 21 benötigt werden. Nach der besonders bevorzugten Variante ist sogar nur eine einzige der Primärinduktivitäten 21 erforderlich.

Eine Steuerungsvorrichtung, welche übergeordnet die Daten- und Energie-Übertragung des Gateways in die Energie- und Daten-Übertragungsschnittstellen 5, 6 steuert oder regelt - insbesondere der Mikrocontroller 18 des Gatewaymoduls 13 oder eine andere Steuerungsvorrichtung - ist dann vorzugsweise dazu ausgelegt, das System entsprechend einem ermittelten Ist-Zustand nachzuregeln.

Vorzugsweise wird die Resonanzfrequenz - insbesondere bei einer induktiven Auslegung der Schnittstellen - des Gesamtsystems nachgeregelt, um bei einer variablen Busteilnehmermodulzahl an Busteilnehmern jeweils den optimalen Betriebspunkt einzustellen. Ggf. wird auch die Eingangsspannung nachgeregelt. Eine Nachregelung kann insbesondere mit Hilfe eines Referenz-Busleitermoduls erreicht werden, welches auch in das Gateway integriert werden kann und welches dann als Referenz für die Nachregelegung genutzt wird.

Insofern wird zwar u.U. - nicht aber zwingend - ein gewisser regelungstechnischer Aufwand notwendig. Es ist aber andererseits möglich, den konstruktiven Aufwand zu verringern und insbesondere die Handhabbarkeit des Systems an Einsatzort und dessen Variabilität deutlich zu erhöhen.

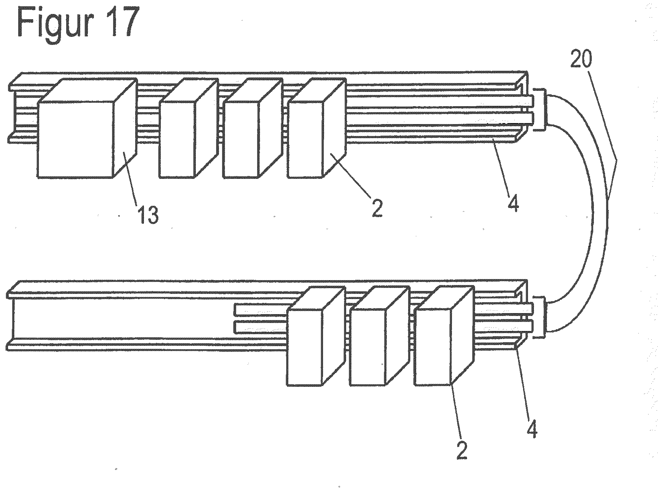

Es ist auch denkbar, dass sich jede der Versorgungsschienen 4 nur über einen Teil der Länge der Tragschiene 1 von z.B. 1 m Länge erstreckt, so über deren halbe Länge, wobei die einzelnen Versorgungsschienen 4 dann mit Kabeln 20 (Fig. 17) miteinander verbunden sind. Analog können auch über mehrere Tragschienen 1 hinweg die Versorgungsschienen 4 über Kabel miteinander verbunden sein. Das System wird derart sehr flexibel.

Vorteilhaft weisen die Versorgungsschienen (vorzugsweise nur) Primärlnduktivitäten/Spulen 21 und/oder Primär-Elektroden (z.B. streifenförmige Leiter) 22 auf, welche eine Erstreckung in Tragschienenrichtung X aufweisen, die größer ist als die Erstreckung von zwei der Busteilnehmermodule.

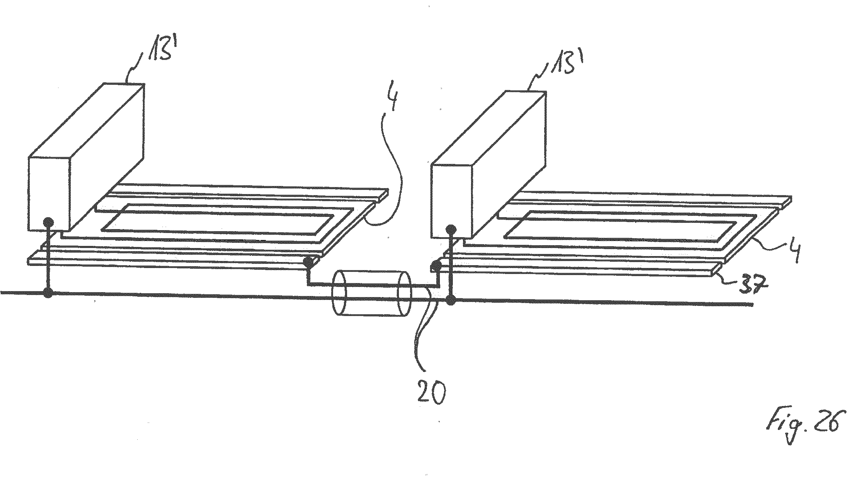

Es ist ein modularer Aufbau der Versorgungsschiene denkbar, bei dem die Datenübertragung per Kabel, zwecks Energieversorgung aber eine separate Einspeisung je Modul erfolgt. Dies veranschaulicht Fig. 26.

Das in die Montageschiene eingelassene Versorgungselement - Versorgungsschiene 4 - kann sowohl durchgehend als auch in einzelne Segmente unterteilt sein. Bei einer Unterteilung soll das Gesamtsystem dennoch logisch zusammenhängen, dafür wird eine kabelgebundene Verbindung 20 zwischen den einzelnen Teilabschnitten 31 vorgesehen. Die Signalwege für die Datenübertragung und eine optionale Positionsbestimmung (je bei 37) lassen auch vorteilhaft sich auf direktem Wege durchschleifen, die Einspeisung für die Energieübertragung jedoch ist für jeden Teilabschnitt separat vorgesehen. Auf diese Weise können die einzelnen Generatormodule 13' kostengünstiger ausfallen, da sie weniger Leistung zur Verfügung stellen müssen, und die Nachregelung weniger komplex ausfällt.

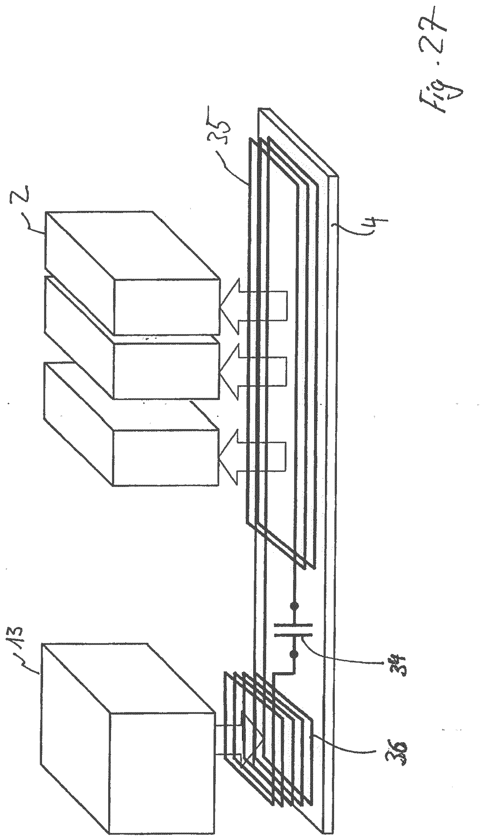

Es ist auch eine kontaktlose Daten- und/oder Energieeinkopplung zwischen Gateway 13 (oder einem sonstigen Generator) und der Versorgungsschiene 4 denkbar. Dies veranschaulicht Fig. 27.

Die Anbindung des Wechselspannungsgenerators an die Primärspule in der Versorgungsschiene 4 kann sowohl direkt kabelgebunden erfolgen, es ist jedoch auch eine ebenfalls induktive Kopplung denkbar. Die Versorgungsschiene 4 beinhaltet in dem Fall vorzugsweise eine feste Rastposition für das Generatormodul 13, welches über einen eigenen Übertrager das erforderliche Signal in eine in der Versorgungsschiene befindliche Sekundärinduktivität 36 einkoppelt. Der Ausgang dieses Übertragers speist dann über einen Resonanzschwingkreis mit Kondensator 34 die eigentliche Primärspule 35, welche die induktive Versorgung der Teilnehmer 2 ermöglicht. Ein vorteilhaftes Merkmal dieses Aufbaus ist weiterhin die Abwesenheit aktiver Komponenten in der Versorgungsschiene 4, was die Ausfallsicherheit begünstigt. Die Versorgungsschiene 4 kann weiterhin als in sich geschlossenes Element ohne elektromechanische Kontakte ausgeführt werden.

Die Steuerungsvorrichtung des Systems ist ferner vorzugsweise dazu ausgelegt, einen physikalischen Parameter zu erfassen, welcher es erlaubt, die Anzahl der auf die Spule oder die Elektrode aufgesetzten Busteilnehmermodule zu ermitteln.

Die Steuerungsvorrichtung des Systems ist ferner vorzugsweise dazu ausgelegt, einen physikalischen Parameter zu erfassen, welcher es erlaubt, die Position in Haupterstreckungsrichtung X der auf die Spule oder die Elektrode aufgesetzten Busteilnehmermodule zu ermitteln.

Als vorteilhaft zu betonen ist ferner, dass sich nach der bevorzugten - aber nicht zwingenden - Ausgestaltung der Erfindung handelsübliche Tragschienen 1 mit den Energie- und Daten-Übertragungseinrichtungen 4 bestücken lassen.

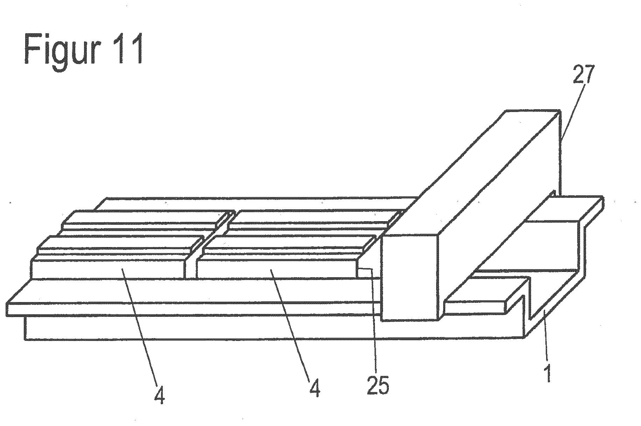

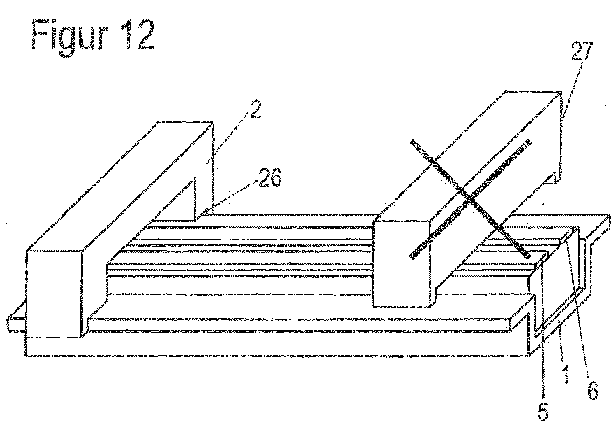

Nach einer weiteren vorteilhaften Variante der Erfindung, die in Fig. 11 bis 13 abgebildet ist - steht zumindest ein Abschnitt der Energie- und Übertragungsrichtung senkrecht zur Tragschiene 1 in Z-Richtung nach oben hin mit einem vorstehenden Bereich 25 aus dem Freiraum 3 vor. Entsprechend weisen die Gehäuse der Busteilnehmermodule 2 und die Gatewaymodule 13 dann eine zum Bereich 25 korrespondierende Aussparung 26 auf. Auf diese Weise lässt sich vorteilhaft eine Kodierung erstellen, welche mechanisch wirkend verhindert, dass nicht zum System gehörige Module 27 (Fig. 12) aufgerastet werden können. Dies dient insbesondere auch der Vermeidung von Störeinflüssen auf das System.

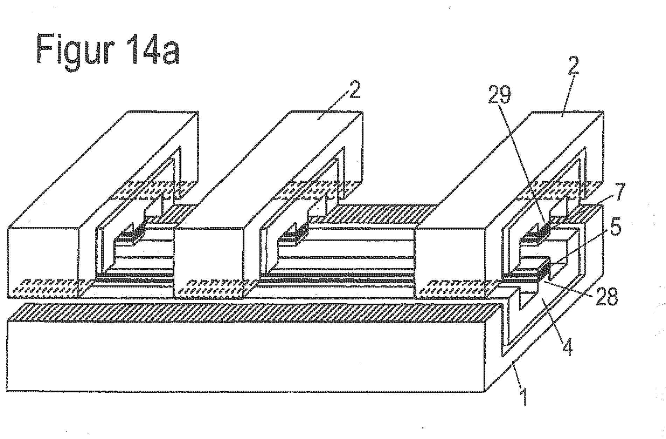

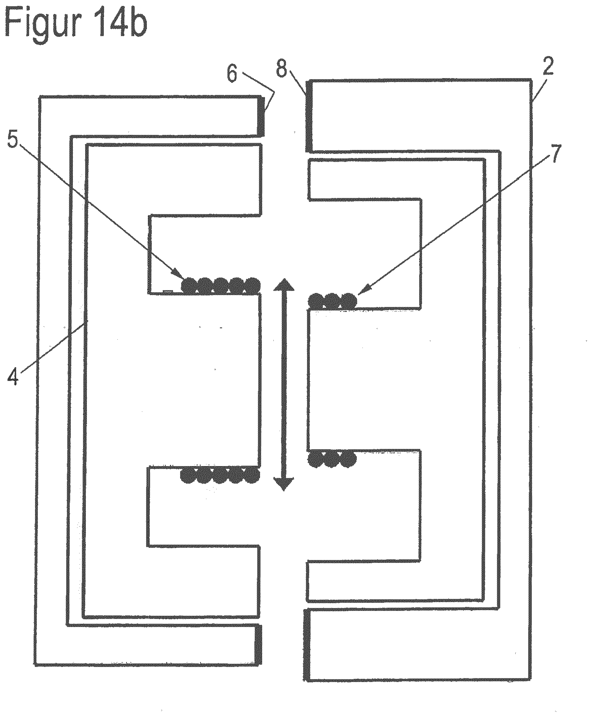

Fig. 14 zeigt eine perspektivische Ansicht und einen Schnitt durch eine vereinfacht dargestellte Anordnung aus einer Tragschiene 1 mit einer Versorgungsschiene mit einer induktiven Energie-Übertragungsschnittstelle 5 und mit einer kapazitiven Daten-Übertragungsschnittstelle 6 und mit einem Busteilnehmermodul mit analogen Schnittstellen 7, 8.

Danach ist die Induktivität (siehe den Primärkern 28) der Primärseite (Tragschienenseite) breiter als die Induktivität (siehe den Sekundärkern 29) der Sekundärseite (Busteilnehmermodul 2). Derart kann vermieden werden, dass die Busteilnehmermodule in Y-Richtung senkrecht zur Tragschiene genau positioniert werden müssen. Es wird vielmehr ein überlappender Bereich geschaffen, innerhalb dessen Positionierungenauigkeiten ausgeglichen werden bzw. unerheblich sind.

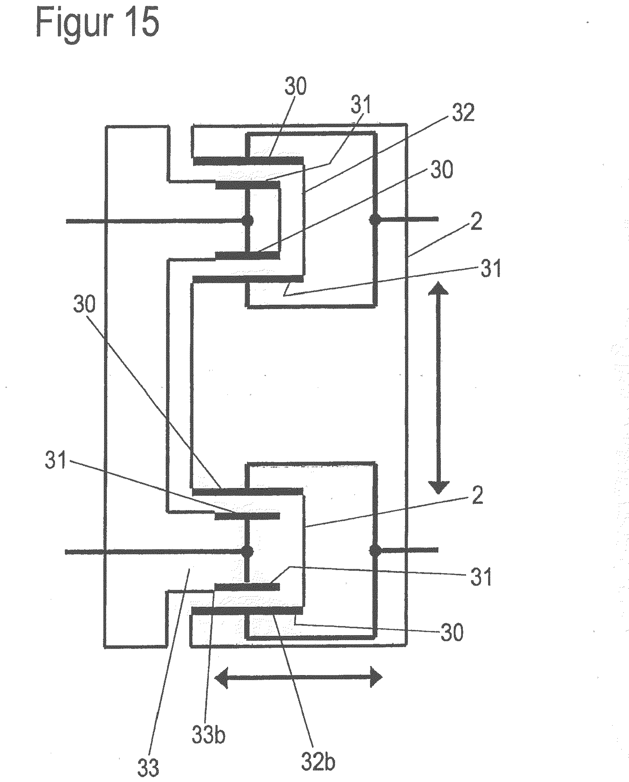

Fig. 15 schafft eine analoge Möglichkeit zum Ausgleich von Positionierungsungenauigkeiten. Hier ist vorgesehen, die Elektroden einer kapazitiv wirkenden Energie- und/oder Daten-Übertragungsvorrichtung jeweils durch parallel geführte Streifenleiter 30, 31 auszubilden. Diese liegen sich aber nicht in X-Y Ebene sondern in X-Z-Richtung. Vorzugsweise sind die Streifenleiter jeweils paarweise an den Seitenschenkeln 32a, b einer U-förmigen Ausnehmung 32 und an den Seitenschenkeln 33a, b eines korrespondierenden Vorsprungs 33 ausgebildet. Derart sind an jedem Vorsprung 33 bzw. jeder Ausnehmung 32 zwei Kapazitäten ausgebildet. Vorzugsweise sind zudem in Y Richtung versetzt jeweils zwei der Vorsprünge 30 und zwei der Ausnehmungen 32 mit jeweils zwei Kapazitäten der vorstehend beschriebenen Art ausgebildet.

Weiter bevorzugt weisen die Streifenleiter 30 in der Ausnehmung eine größere Erstreckung senkrecht zur Tragschiene (in Z-Richtung) aus als die Streifenleiter 31 an den Seitenschenkeln der Vorsprünge 30. Derart wird auf einfache Weise eine Reduzierung des Einflusses von Positionierungsfehlern sowohl in X-Richtung als auch in Z-Richtung erreicht.

Eine Nachregelung der Betriebs-Resonanzfreuquenz ist denkbar, aber nicht zwingend erforderlich, so nicht bei einer kapazitiven Auslegung der Schnittstellen oder dann, wenn nur weniges Busteilnehmermodule bei einer induktiven Auslegung je Primärinduktivität vorgesehen sind.

Auch bei dem kapazitiven, kontaktlosen Energie- und Datenkopplungssystem kann eine gleichzeitige Anbindung mehrerer Busteilnehmermodule 2 erfolgen.

Die kapazitiven Kopplungsflächen für die Daten-Übertragung und die Energie-Übertragung werden vorzugsweise räumlich voneinander getrennt auf einer geeigneten Trägerstruktur der Versorgungsschiene 4 untergebracht.

Die Signalaufbereitung für die Energieversorgung erfolgt vorzugsweise primärseitig über einen Inverter und sekundärseitig über einen Gleichrichter mit einem nachgeschalteten DC/DC-Wandler (um die gewünschte Spannung zu erreichen); siehe Fig. 10.

Durch eine geeignete Auslegung des Resonanzschwingkreises kann die Resonanzfrequenz unabhängig von der Anzahl der Busteilnehmer (Busteilnehmermodule 2) konstant gehalten werden.

Fig. 18 veranschaulicht eine Variante zur Induktiven Energieübertragung und zur kapazitiven Datenübertragung. Hierbei ist an der Versorgungsschiene in einer Ebene parallel zur der X, Y-Ebene eine Schnittstelle 5 für eine kapazitive Datenübertragung vorgesehen und an dem Busteilnehmermodul eine korrespondierende Schnittstelle 7 für eine kapazitive Datenübertragung an einer korrespondierenden Fläche in einer Ebene parallel zur X-Y-Ebene. Dahingegen erfolgt die Energieübertragung induktiv mit Spulen an Seiten der Versorgungsschiene, welche parallel zur X-Z-Ebene ausgerichtet sind. Die Induktivität auf der Primärseite ist um einen Spulenkern 25 gewickelt, dessen Stirnseiten den Seiten 36, 37 der Versorgungsschiene gegenüber liegen.

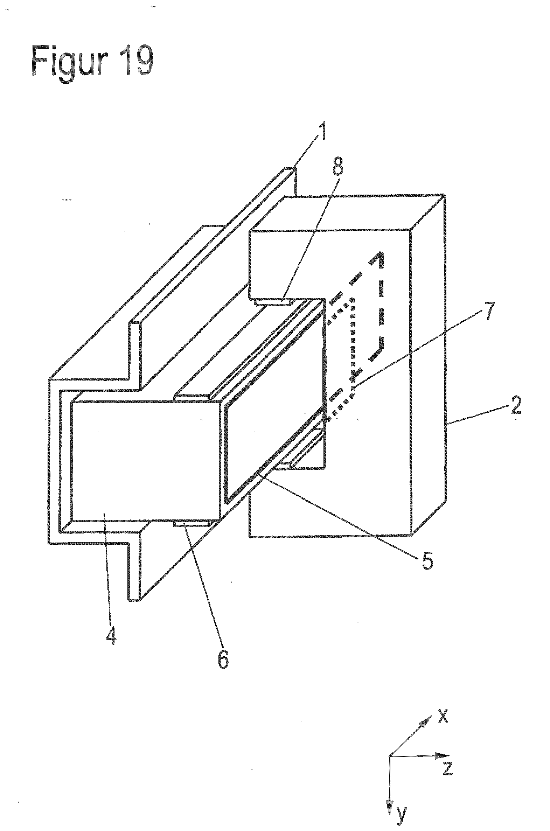

Fig. 19 zeigt schließlich noch eine mögliche Variante zur induktiven Energieübertragung 5, 7 und zur kapazitiven Datenübertragung 6, 8. Hier liegen sich die Spulen wiederum in Ebenen in der X-Y-Ebene gegenüber, während die Elektroden zur kapazitiven Datenübertragung an Seiten der Versorgungsschiene in der Y-Z-Ebene angeordnet sind.

Nach Fig. 18 und 19 sind die Schnittstelle an der Versorgungsschiene zur Energieübertragung und zur Datenübertragung klar räumlich getrennt voneinander in verschiedenen Ebenen - hier senkrecht zueinander ausgerichteten Ebenen - ausgerichtet.

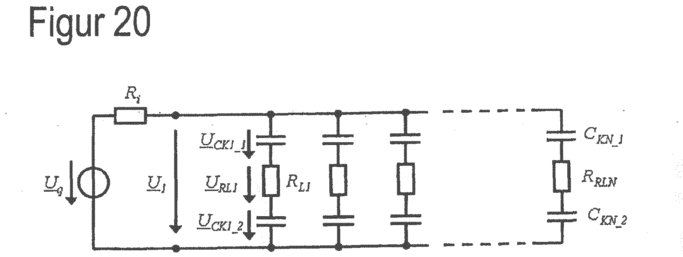

Die Figuren 20 bis 25 veranschaulichen ein Verfahren zur Positionsbestimmung in linearen Anordnungen.

Bei diesem Verfahren zur kontaktlosen Positionsbestimmung der anreihbaren Busteilnehmermodule 2 wird vorzugsweise bei kapazitiver Auslegung der Energie- und/oder Daten-Übertragungsschnittstellen 5, 6 genutzt.

Dabei bildet jeder einzelne Teilnehmer bzw. jedes einzelne Busteilnehmermodul 2 in Verbindung mit der Tragschiene 1 mit der Energie- und Daten-Übertragungsschnittstelle zwei Kopplungskapazitäten aus.

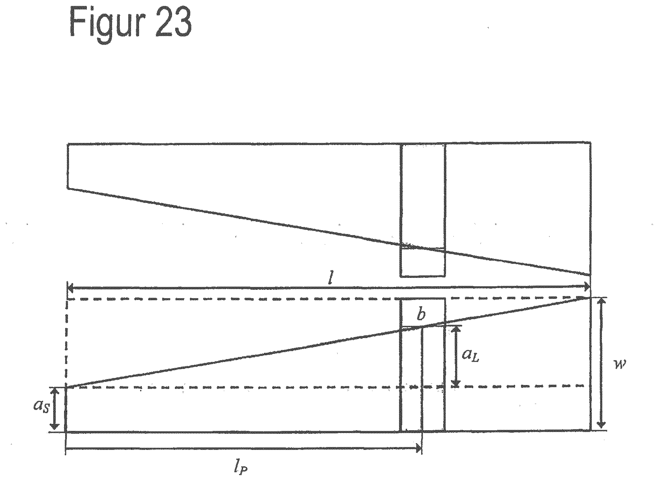

Vorzugsweise ist dabei die Kapazität ortsveränderlich ausgelegt (Fig. 23), indem eine oder beiden eine sich in X-Richtung verändernde Geometrie aufweisen und/oder indem ihr Abstand in X-Richtung variiert und/oder ein ggf. auf einer oder beiden Elektroden angeordnetes Dielektrikum hinsichtlich seiner Beschaffenheit oder Geometrie variiert.

Damit ist es neben der kapazitiven Energie- und Daten-Übertragung und der induktiven Energie- und Daten-Übertragung insbesondere es auch denkbar, die Energie-Übertragungsschnittstelle induktiv auszulegen und Daten-Übertragungsschnittstelle kapazitiv.

Derart kann eine besonders große Zahl von Teilnehmern angebunden werden.

Eine zentrale Steuereinheit regelt wiederum den Zugriff der Busteilnehmermodule 2 auf das Netzwerk (Master-Slave-Prinzip).

Dabei wird eine Entkopplung der induktiven und kapazitären Signalübertragung durch die Verwendung unterschiedlicher Frequenzbereiche sowie durch eine unterschiedliche geometrische Anordnung möglich.

Vorzugsweise wird die geometrische Ausführung derart gestaltet, dass eine große mechanische Positioniertoleranz erlaubt ist.

Dabei ist auch vorgesehen, dass eine automatische Positionserkennung nach dem vorstehend beschriebenen Verfahren erfolgt.

Die Signale, die dabei entstehen, werden mittels des Mikroprozessors bzw. der Steuerungsvorrichtung ausgewertet.

Dabei wird eine Resonanzfrequenz ermittelt.

Ist diese Resonanzfrequenz ermittelt, erfolgt eine Auswertung der Höhe des ortsabhängigen Resonanzpeaks.

Hierzu wird beispielsweise der Streifenleiter, welcher einen Teil des Kopplungskondensators bildet, an der Tragschiene 1 nicht in Rechteckform ausgebildet, sondern in einer vorbekannten, von der Endform abweichenden Geometrie.

Nach Figur 23 ist vorgesehen, dass sich der Streifenleiter ausgehend von einer Basisbreite Y1 an einem Ort X1 in X-Richtung verbreitert, d.h. seine Breite in Y-Richtung nimmt zu.

Über diese Breite ergibt sich eine veränderliche Kapazität in X-Richtung.

Aus der Kapazität kann insofern ein Rückschluss auf den Ort der jeweils aufgerasteten Komponente erfolgen.

Nachfolgend sei noch ein bevorzugtes Verfahren zur Positionsbestimmung auf linearen Strukturen erläutert, wie sie die Versorgungsschiene mit ihren Primär-Elektroden und/oder Primärinduktivitäten darstellt.

Zur Bestimmung der Reihenfolge der montierten Teilnehmer bzw. Busteilnehmermodule 2 ist es erforderlich, entweder linear sämtliche Teilnehmer durchzuzählen, oder aber ihre einzelnen, geometrischen Positionen zu bestimmen und zu vergleichen. Es wird vorgeschlagen, eine spezielle physikalische Größe entlang der Erstreckungsrichtung der Montageschiene zu verändern. Die Tatsache, dass es sich um eine kontaktiose Verbindung handelt, schränkt die Wahl der zur Verfügung stehenden physikalischen Parameter ein, es bietet sich hier eine kapazitive Lösung an. Die Veränderung der Kapazität zwischen zwei Elektroden, welche in Form von Streifenleitern ausgeführt werden können, kann durch verschiedene Maßnahmen erreicht werden.

$$C_K = \varepsilon_0 \cdot \varepsilon_R \cdot \frac{A}{d}$$

Ausgehend von der grundsätzlichen mathematischen Beschreibung der Kapazität wie sie durch vorhergehende Formel beschrieben wird, kann eine ortsabhängige Auslegung der Fläche $A$, des Elektrodenabstandes $d$ oder der Eigenschaften des Dielektrikums, beschrieben durch die Dielektrizitätszahl $\varepsilon_R$, dazu verwendet werden, eine ebenso ortsabhängige Kopplungskapazität zu erhalten, welche sich messtechnisch auswerten lässt. Am Beispiel der variablen Fläche wird nachfolgend eine mögliche Ausführung der Elektrodenanordnung beschrieben, welche sich für die Anwendung auf der Versorgungsschiene eignet und gegebenenfalls mit der Energie- und/oder Datenanbindung direkt kombiniert werden kann.

Hierzu wird auf Fig. 23 verwiesen, welche eine mögliche geometrische Auslegung der Elektrodenflächen zur Positionsbestimmung veranschaulicht.

Hierbei wird eine dreiecksförmige Grundfläche auf der Primärseite verwendet, welche in Kombination mit einer entgegen gesetzten Elektrodenfläche auf der Sekundärseite die Ausbildung zweier Kondensatoren ermöglicht, deren Kapazitätswert direkt von der überlappenden Fläche, und damit von der Position des Moduls abhängig ist. Die wirksame Fläche A ergibt sich aus dem Produkt der sekundären Modulbreite $b$ und der mittleren, vertikalen Dimension $a$, welche sich in Abhängigkeit der Positionsvariablen $l_P$ wie folgt ausdrücken lässt:

$$a = a_S + a_L, \text{ mit } a_L = \frac{w - a_S}{l} \cdot l_P \quad \Rightarrow \quad a = a_S + \frac{w - a_S}{l} \cdot l_P \qquad (2)$$

Die wirksame Fläche $A$ lässt sich daher allgemein aus dem Produkt von $a$ und $b$ bestimmen:

$$A = a \cdot b = \left( a_S + \frac{w - a_S}{l} \cdot l_P \right) \cdot b \qquad (3)$$

Eingesetzt in die Formel zur allgemeinen Kapazitätsberechnung lässt sich daher die folgende Gleichung zur positionsabhängigen Kopplungskapazität $C_K$ aufstellen:

$$C_K(l_P) = \varepsilon_0 \cdot \varepsilon_r \cdot \left( a_S + \frac{w - a_S}{l} \cdot l_P \right) \cdot \frac{b}{d} \qquad (4)$$

Fig. 20 zeigt eine Schaltungsvariante 1, bei welcher eine Spannungsmessung auf der Sekundärseite erfolgt.

Die einfachste Methode zur Positionsbestimmung auf der Sekundärseite kann durch die Messung eines Spannungsabfalls (respektive Stromflusses) über einen Lastwiderstand erfolgen. Mit zunehmender Kapazität des Kopplungskondensators verringert sich der darüber auftretende Spannungsabfall, welches bei konstanter Eingangsspannung auf der Primärseite zu einem höheren Spannungsabfall über den jeweiligen Lastwiderstand auf der Sekundärseite führt.

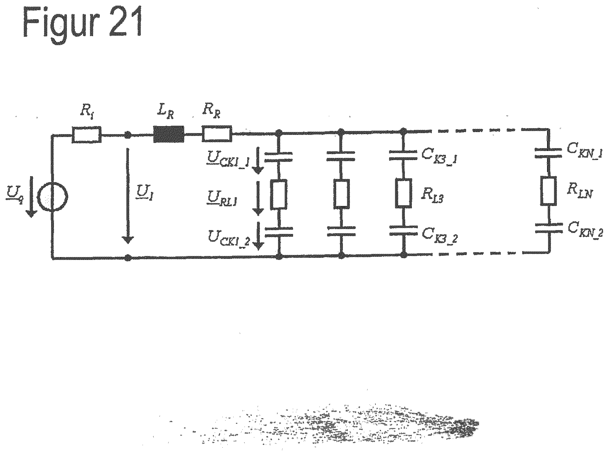

Fig. 21 zeigt eine Schaltungsvariante 2 mit einer Serienresonanz auf der Primärseite.

Ein Ansatz, der mit einer sehr geringen Anzahl zusätzlicher Komponenten auskommt, verwendet eine Resonanzinduktivität auf der Primärseite. Das auf dieser Seite eingekoppelte Signal muss dabei der System-Resonanzfrequenz entsprechen, welche sich aus dem Wert der Induktivität und der Parallelschaltung der Kopplungskapazitäten ergibt. Damit ist die Systemresonanzfrequenz nicht konstant, sondern abhängig von der Anzahl der vorhandenen sekundärseitigen Module. Eine Auswertung der Resonanzfrequenz auf der Primärseite ermöglicht daher die Bestimmung der Teilnehmeranzahl, aber noch nicht die Reihenfolge.

Die Grenzen der Systemresonanzfrequenz werden von zwei Zuständen beschrieben. Die höchstmögliche Resonanzfrequenz ergibt sich für den Fall, dass nur ein einzelner Teilnehmer vorhanden ist, und dieser sich an der Position der kleinsten Kopplungskapazität befindet. Dieser Zustand lässt sich allgemein beschreiben durch:

$$C_{K-\min}\left(l_P = \frac{b}{2}\right) = \varepsilon_0 \cdot \varepsilon_r \cdot \left(a_S + \frac{(w-a_S)\cdot b}{2\cdot l}\right)\cdot\frac{b}{d}$$

Der untere Grenzwert der Resonanzfrequenz wird durch den Fall definiert, dass das System auf der vollen Länge belegt ist, was zu der größtmöglichen, wirksamen Kopplungskapazität führt:

$$C_{K-\max} = \varepsilon_0 \cdot \varepsilon_r \cdot \left(a_S + \frac{w-a_S}{2}\right)\cdot\frac{l}{d} \qquad (7)$$

Allgemein können die sich daraus ergebenden Grenzfrequenzen folgendermaßen formuliert werden:

$$f_{R-\min} = \frac{1}{\pi\cdot\sqrt{2\cdot L_R \cdot C_{K-\max}}}; \quad f_{R-\max} = \frac{1}{\pi\cdot\sqrt{2\cdot L_R \cdot C_{K-\min}}} \qquad (8)$$

Der Spannungsabfall auf der Sekundärseite, welcher für die individuelle Positionsbestimmung genutzt werden kann, ist von der jeweiligen sekundärseitigen Impedanz abhängig, welche sich aus der Reihenschaltung der Kopplungskondensatoren und dem Lastwiderstand ergibt:

$$\underline{Z}_{2N} = R_{LN} + \frac{2}{j\omega\cdot C_{KN}}$$

Diese Sekundärimpedanzen sind aus Sicht der Primärseite parallel angeordnet, und werden daher mit derselben Eingangsspannung beaufschlagt

$$(2\cdot\underline{U}_{CKN} + \underline{U}_{LN} = const.).$$

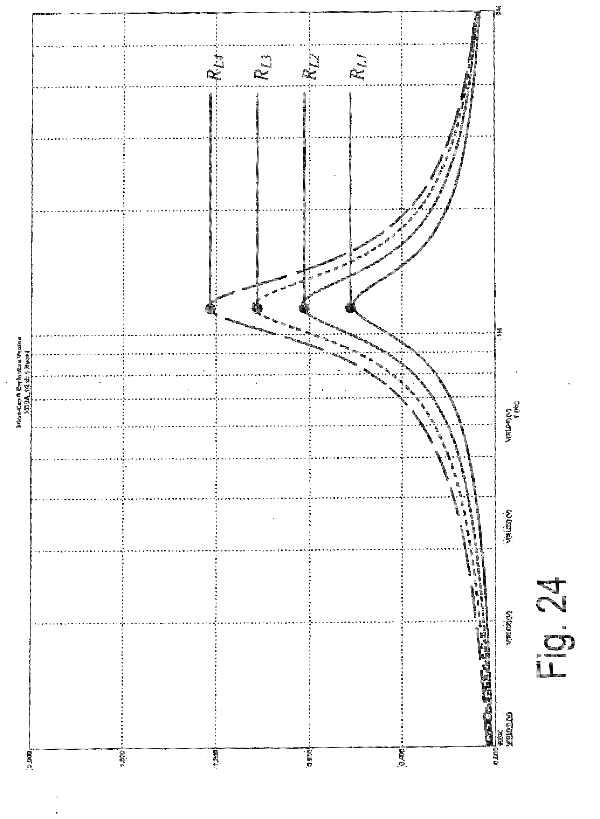

Bei konstanten, sekundären Lastwiderständen ist die Spannung auf der Sekundärseite daher eine Funktion der individuellen Kopplungskapazität, respektive der Ortsvariablen $l_P$. Am Beispiel eines Systems mit vier Teilnehmern auf unterschiedlichen Positionen kann ein Spannungsverlauf wie in der Fig. 24 gezeigten Simulation für die Schaltungsvariante 1 aussehen.

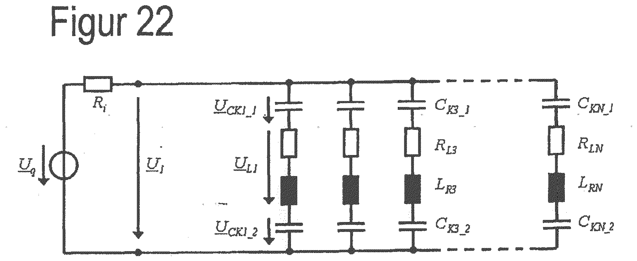

Fig. 22 zeigt eine Schaltungsvariante 3 mit einer Serienresonanz auf der Sekundärseite.

Alternativ zur Resonanzschaltung auf der Primärseite kann die für die Resonanzbedingung erforderliche Induktivität auch sekundärseitig angeordnet werden. Im Gegensatz zu Schaltungsvariante 2 erhöht sich die Anzahl der erforderlichen Komponenten, welche sich nun nach der Anzahl der Teilnehmer richtet. Weiterhin wird die Position eines Teilnehmers nun nicht durch die Höhe des Spannungsabfalls auf der Sekundärseite definiert, sondern durch die jeweilige Resonanzfrequenz. Aus Sicht der Primärseite stellt sich nicht mehr eine einzelne Systemresonanzfrequenz ein, sondern einzelne Resonanzfrequenzen, welche durch die jeweilige Teilnehmerposition definiert werden. Durch diese Beschaltung kann sowohl ein einzelner Teilnehmer seine Position bestimmen, indem er seine eigene, individuelle Resonanzfrequenz findet, aber auch aus Sicht der Primärseite kann sowohl die Anzahl als auch die Position der angeschlossenen Teilnehmer ermittelt werden.

Um eine Resonanzfrequenz bestimmen zu können, ist es erforderlich ein Spannungs- oder Stromsignal auf der Sekundärseite zu generieren, welches für eine Messung ausreichend stark ist. Am Beispiel der sekundärseitigen Spannung lässt sich deren Ausdruck in Abhängigkeit der Kopplungskapazität wie nachfolgend beschrieben aufstellen:

$$\underline{U}_{RLN} = \frac{R_{LN}}{\dfrac{2}{j\omega \cdot C_{KN}} + j\omega \cdot L_{RN} + R_{LN}} \cdot \underline{U}_1$$

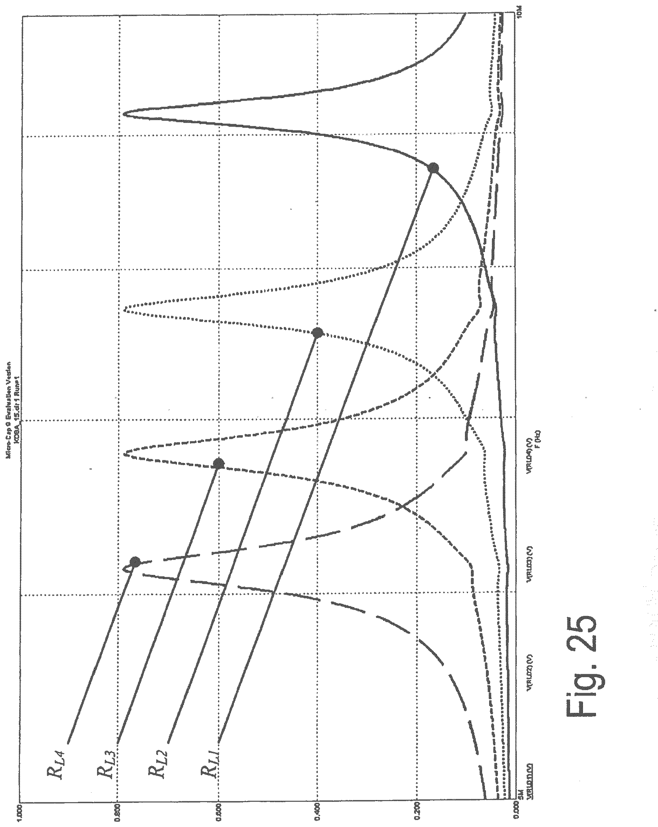

Unter Berücksichtigung derselben Parameter wie in der Simulation für Schaltungsvariante 2 stellt sich das rechnerische Ergebnis für die Resonanzfrequenzverteilung wie in Fig. 25 dar, welche Simulationsergebnisse für Schaltungsvariante 3 zeigt.

**Bezugzeichen**

| | |
|---|---|
| Tragschiene | 1 |
| Grundschenkel | 1a |
| Seitenschenkel | 1b, 1c |
| Randschenkel | 1d, 1e |
| Busteilnehmermodule | 2 |
| u-förmigen Raum | 3 |
| Versorgungsschiene | 4 |
| Primärseitige Energie-Übertragungsschnittstelle | 5 |
| Primärseitige Daten-Übertragungsschnittstelle | 6 |
| Sekundärseitige Energie-Übertragungsschnittstelle | 7 |
| Sekundärseitige Daten-Übertragungsschnittstelle | 8 |
| Mikrocontroller | 9 |
| Anschlüsse | 10, 11 |
| Feldgeräte | 12 |
| Gatewaymodul | 13 |
| Energie-Übertragungsschnittstelle | 14 |
| Daten-Übertragungsschnittstelle | 15 |
| Energiequelle | 16 |
| Busebene | 17 |
| Mikrocontroller | 18 |
| Busebenen-Schnittstelle | 19 |
| Kabel | 20 |
| Primär-Induktivität | 21 |
| Primär-Elektrode | 22 |
| Sekundär-Induktivität | 23 |
| Sekundär-Elektrode | 24 |
| Bereich | 25 |
| Aussparung | 26 |
| Module | 27 |
| Primärkern | 28 |
| Sekundärkern | 29 |
| Streifenleiter | 30,31 |
| Ausnehmung | 32 |
| Seitenschenkel | 32a, b; 33a, b |
| Vorsprung | 33 |
| Kondensator | 34 |
| Primärspule | 35 |
| Sekundärinduktivität | 36 |
| Signalwege | 37 |
| | |
| Haupterctreckungsrichtung | X |
| Richtungen | Y, Z |

**Patentansprüche**

1. System mit einer Montagebasis und mit Busteilnehmermodulen zur berührungslosen Daten- und Energieversorgung der auf der Montagebasis aneinander reihbaren Busteilnehmermodule, wobei die Montagebasis eine Energie-Übertragungsschnittstelle (5) und eine Daten-Übertragungsschnittstelle (6) aufweist und die Busteilnehmermodule (2) jeweils eine korrespondierende Energie-Übertragungsschnittstelle (7) und eine korrespondierende Daten-Übertragungsschnittstelle (8) aufweisen, **dadurch gekennzeichnet, dass** die Montagebasis als eine Montageschiene ausgebildet ist, welche mit einer sich in Haupterstreckungsrichtung der Montageschiene (1) erstreckenden Versorgungsschiene (4) versehen ist, welche die Energie-Übertragungsschnittstelle (5) und die Daten-Übertragungsschnittstelle (6) aufweist, wobei die Montageschiene als Tragschiene (1) mit einem hutförmigen Querschnitt ausgestaltet ist, auf welcher die Busteilnehmermodule (2) arretierbar und rasterfrei aneinander reihbar sind, und einen Freiraum (3) aufweist, wobei die Versorgungsschiene (4) zumindest teilweise in den Freiraum (3) integriert, vorzugsweise eingesetzt ist, wobei die Busteilnehmermodule (2) auf der Tragschiene (1) in deren Haupterstreckungsrichtung rasterlos frei positionierbar sind und wobei sich die Versorgungsschiene in Anreihrichtung über mehr als ein Busteilnehmermodul erstreckt und wobei die Versorgungsschiene (4) eine Trägerstruktur aufweist, auf die zur induktiven und kapazitiven Kopplung wenigstens eineoder mehrere Induktivitäten und Elektroden aufgebracht sind, wobei die Energie-Übertragungsschnittstelle (5) der Montagebasis für eine induktive berührungslose Übertragung ausgelegt ist und eine primärseitige Induktivität aufweist und die korrespondierende Energie-Übertragungsschnittstelle (7) der Busteilnehmermodule (2) für eine induktive berührungslose Übertragung ausgelegt ist und eine sekundärseitige Induktivität aufweist, und die Daten-Übertragungsschnittstelle (6) der Montagebasis für eine kapazitive berührungslose Übertragung ausgelegt ist und die korrespondierende Daten-Übertragungsschnittstelle (8) der Busteilnehmermodule (2) für eine kapazitive berührungslose Übertragung ausgelegt ist, wobei die Daten-Übertragungsschnittstelle (6) der Montagebasis eine Elektrode aufweist, die ein Streifenleiter ist, welcher zur kapazitiven Daten-Übertragung zu mehreren sekundärseitigen Elektroden der Busteilnehmermodule ausgelegt ist.

2. System nach Anspruch 1, **dadurch gekennzeichnet, dass** die Versorgungsschiene (4) einen über den Freiraum (3) in der Tragschiene (1) vorstehenden Vorsprung (25) aufweist und dass die Busteilnehmermodule (2) eine Aussparung (26) aufweisen, in welche der Vorsprung (25) im auf die Tragschiene (1) montierten Zustand eingreift.

3. System nach Anspruch 1 oder 2, **dadurch gekennzeichnet, dass** die primärseitige Induktivität als Mittel zum Ausgleich von Positionierungenauigkeiten eine andere Baubreite in Y-Richtung senkrecht zur Tragschiene aufweist als die sekundärseitigen Induktivitäten und/oder dass primär- und sekundärseitige Elektroden (30, 31) senkrecht zur Tragschienenebene in X-Y-Richtung an Seitenschenkeln ineinander greifender Vorsprünge (33) und Ausnehmungen (32) an der Versorgungsschiene (4) und an den Busteilnehmermodulen (2) ausgebildet sind.

4. System nach dem vorstehenden Anspruch, **dadurch gekennzeichnet, dass** die Elektroden senkrecht zur Tragschienenebene in X-Y-Richtung an den Seitenschenkeln der ineinandergreifenden Vorsprünge und Ausnehmungen an der Versorgungsschiene und an den Busteilnehmermodulen verschieden breit in Z-Richtung senkrecht zur Tragschiene ausgerichtet sind, um Positionierungenauigkeiten auszugleichen.

5. System nach dem vorstehenden Anspruch, **dadurch gekennzeichnet, dass** die Streifenleiter an der Versorgungsschiene (4) eine sich in Haupterstreckungsrichtung veränderliche Baubreite in Y-Richtung aufweisen.

6. System nach dem vorstehenden Anspruch, **dadurch gekennzeichnet, dass** es die Steuerungsvorrichtung aufweist, welche dazu ausgelegt ist, das System in Abhängigkeit der Anzahl von auf die Tragschiene aufgesetzten Busteilnehmermodulen nachzuregeln.

7. System nach dem vorstehenden Anspruch, **dadurch gekennzeichnet, dass** es die Steuerungsvorrichtung aufweist, welches dazu ausgelegt ist, die Anzahl der auf die Tragschiene aufgesetzten Busteilnehmermodule aus wenigstens einem ermittelbaren physikalischen Parameter zu ermitteln und das System in Abhängigkeit von der Anzahl der auf die Tragschiene aufgesetzten Busteilnehmermodulen nachzuregeln und/oder dass es die Steuerungsvorrichtung aufweist, welches dazu ausgelegt ist, den absoluten Ort der auf die Tragschiene aufgesetzten Busteilnehmermodulen zu ermitteln.

8. System nach einem der vorstehenden Ansprüche, **dadurch gekennzeichnet, dass** es ein Gatewaymodul (13) aufweist und dass das Gatewaymodul vorzugsweise mit der Steuerungsvorrichtung versehen ist, wobei vorzugsweise das Gatewaymodul (13) über eine oder mehrere elektrische Leitungen/Kabel mit der Versorgungsschiene (4) verbunden und an die Induktivität/Kapazität auf der Versorgungsschiene angeschlossen ist.

**9.** System nach einem der vorstehenden Ansprüche, **dadurch gekennzeichnet, dass** das Gatewaymodul (13) die elektrischen und/oder elektronischen Bauelemente aufweist, die ferner zur Realisierung einer Sendeeinheit oder einer kombinierten Sende- und Empfangsvorrichtung notwendig sind und/oder dass an das Gatewaymodul mehrere der Versorgungsschienen angeschlossen sind, deren Energie- und Daten-Übertragungsschnittstellen miteinander über eine Kabelverbindung miteinander verschaltet sind.

**10.** Verfahren zum Betreiben eines Systems nach einem der vorstehenden Ansprüche 6 bis 8 oder 9, wenn auf Ansprüche 6 - 8 rückbezogen, **dadurch gekennzeichnet, dass** mit der Steuerungsvorrichtung die Anzahl der auf die Tragschiene aufgesetzten Busteilnehmermodule aus wenigstens einem ermittelbaren physikalischen Parameter bei der Energie- und/oder Daten-Übertragung ermittelt wird und dass das System in Abhängigkeit der Anzahl von auf die Tragschiene aufgesetzten Busteilnehmermodulen nachgeregelt wird.

**11.** Verfahren zum Betreiben eines Systems nach einem der vorstehenden Ansprüche 6 bis 8 oder 9, wenn auf Ansprüche 6 - 8 rückbezogen, **dadurch gekennzeichnet, dass** mit der Steuerungsvorrichtung der absolute Ort der auf die Tragschiene aufgesetzten Busteilnehmermodulen ermittelt wird.

**Claims**

**1.** System, comprising a subbase and bus subscriber modules, for contactless data and energy supply of the bus subscriber modules that can be lined up next to each other on the subbase, whereby the subbase has an energy transmission interface (5) and a data transmission interface (6) and the bus subscriber modules (2) in each case have a corresponding energy transmission interface (7) and a corresponding data transmission interface (8), **characterized in that** the subbase is made as a mounting rail, which is provided with one supply bar (4) that extends along the main extension direction of the mounting rail (1) and which displays the energy transmission interface (5) and the data transmission interface (6), wherein the assembly rail is made as mounting rail (1) with a hat-shaped cross-section upon which one can arrest the bus subscriber modules (2) and which can be lined up against each other in a grid-free manner, and has a free space (3), whereby the supply bar (4) is integrated at least partly or preferably inserted in the free space (3), wherein the bus subscriber modules (2) can be freely positioned on mounting rail (1) in the latter's main extension direction in a grid-free fashion and wherein the supply bar extends in the lineup over more than one bus subscriber module and wherein the supply bar (4) has a support structure upon which are placed for inductive and capacitive coupling at least one or several inductivities and electrodes, wherein the energy transmission interface (5) of the subbase is designed for inductive contactless transmission and has a primary-side inductivity, and the corresponding energy transmission interface (7) of the bus subscriber modules (2) is designed for inductive contactless transmission and has a secondary-side inductivity, and the data transmission interface (6) of the subbase is designed for capacitive contactless transmission and the corresponding data transmission interface (8) of the bus subscriber modules (2) is designed for capacitive contactless transmission, wherein the data transmission interface (6) of the subbase has an electrode, which is a strip conductor, which is designed for capacitive data transmission toward several secondary-side electrodes of the bus subscriber modules.

**2.** System according to Claim 1, **characterized in that** the supply bar (4) has a projection (25) that sticks out over the free space (3) in the mounting rail (1) and that the bus subscriber modules (2) have a recess (26) in which engages the projection (25) in the state mounted on mounting rail (1).

**3.** System according to Claim 1 or 2, **characterized in that** the primary-side inductivity as a means for the adjustment of positioning inaccuracies has a different structural width in the Y direction perpendicularly to the mounting rail when compared to the secondary-side inductivities and/or that primary and secondary-side electrodes (30, 31) are made perpendicularly to the mounting rail level in the X-Y direction on side legs [with] mutually engaging projections (33) and recesses (32) on the supply bar (4) and on the bus subscriber modules (2).

**4.** System according to the above claim, **characterized in that** the electrodes are aligned perpendicularly to the mounting rail level in the X-Y direction on the side legs of the mutually engaging projections and recesses on the supply bar and on the bus subscriber modules are arranged with different width in the Z direction perpendicularly to the mounting rail in order to adjust positioning inaccuracies.

**5.** System according to the above claim, **characterized in that** the strip conductors on the supply bar (4) have a structural width that can be changed along the main extension direction in the Y direction.

**6.** System according to the above claim, **characterized in that** it has the control device which is designed to adjust the system as a function of the number of the bus subscriber modules that are set upon the mounting rail.

**7.** System according to the above claim, **characterized in that** it has the control device, which is designed to determine the number of bus subscriber modules that are set upon the mounting rail from at least one determinable critical parameter and to adjust the system as a function of the number of the bus subscriber modules set upon the mounting rail and/or it has the control device, which is designed to determine the absolute order of the bus subscriber modules that are set upon the mounting rail.

**8.** System according to one of the above claims, **characterized in that** it has a Gateway module (13) and that the Gateway module preferably is provided with the control device, wherein preferably the Gateway module (13) is connected by one or several electrical lines/cables with the supply bar (4) and is tied to the inductivity/capacity on the supply bar.

**9.** System according to one of the above claims, **characterized in that** Gateway module (13) has the electrical and/or electronic structural elements which furthermore are necessary to implement a transmission unit or a combined transmission and receiving device and/or that connected to the Gateway module, there are several supply bars whose energy and data transmission interfaces are wired with each other via a cable connection.

**10.** Method for the operation of a system according to one of the above claims 6 to 8 or 9 if referring back to claims 6-8, **characterized in that** with the help of the control device, the number of bus subscriber modules set upon the mounting rail can be determined from at least one determinable critical parameter during energy and/or data transmission and that the system is readjusted as a function of the number of bus subscriber modules set upon the mounting rail.

**11.** Method for the operation of a system according to one of the above claims 6 to 8 or 9 if referring back to claims 6-8, **characterized in that** absolute site of the bus subscriber modules set upon the mounting rail is determined with the help of the control device.

**Revendications**

**1.** Système muni d'un socle de montage et de modules connectés à un bus pour la transmission sans contact de données et d'énergie aux modules connectés à un bus pouvant être montés ensemble en série sur le socle de montage, dans lequel le socle de montage comporte une interface de transmission d'énergie (5) et une interface de transmission de données (6) et les modules connectés au bus (2) présentent chacun une interface de transmission d'énergie (7) correspondante et une interface de transmission de données (8) correspondante, **caractérisé en ce que** le socle de montage est conformé comme un rail de montage muni d'un rail d'alimentation (4) qui s'étend dans un sens d'extension principal du rail de montage (1) et qui présente l'interface de transmission d'énergie (5) et l'interface de transmission de données (6), le rail de montage étant conformé comme un rail de support (1) à section oméga sur lequel les modules connectés au bus (2) peuvent être bloqués et alignés les uns avec les autres sans crans et présentant un espace libre (3), le rail d'alimentation (4) étant intégré au moins en partie, de préférence inséré, dans l'espace libre (3), les modules connectés au bus (2) pouvant être positionnés librement sans crans sur le rail de support (1) dans leur direction d'extension principale et le rail d'alimentation s'étendant dans la direction d'alignement sur plus d'un module connecté au bus et le rail d'alimentation (4) comportant une structure de support sur laquelle sont posées au moins une ou plusieurs inductances ou électrodes pour le couplage inductif ou capacitif, l'interface de transmission d'énergie (5) du socle de montage étant conçue en vue d'une transmission sans contact par induction et présentant une inductance de côté primaire et l'interface de transmission d'énergie (7) correspondante des modules connectés au bus (2) étant conçue en vue d'une transmission sans contact par induction et comportant une inductance de côté secondaire, et l'interface de transmission de données (6) du socle de montage étant conçue en vue d'une transmission sans contact capacitive et l'interface de transmission de données (8) correspondante des modules connectés au bus (2) étant conçue en vue d'une transmission sans contact capacitive, l'interface de transmission de données (6) du socle de montage présentant une électrode qui est un conducteur en microbande conçu en vue de la transmission capacitive de données à plusieurs électrodes de côté secondaire des modules connectés au bus.

**2.** Système selon la revendication 1, **caractérisé en ce que** le rail d'alimentation (4) présente une saillie (25) qui dépasse au-delà de l'espace libre (3) dans le rail de support (1) et **en ce que** les modules connectés au bus (2) présentent une découpe (26) dans laquelle la saillie (25) se met en prise dans l'état monté sur le rail de support (1).

3. Système selon la revendication 1 ou 2, **caractérisé en ce que** l'inductance du côté primaire possède, comme moyen pour compenser les imprécisions de positionnement, une largeur différente sur l'axe Y perpendiculairement au rail de support de celle des inductances du côté secondaire et/ou **en ce que** des électrodes de côté primaire et secondaire (30, 31) sont formées perpendiculairement au plan du rail de support dans le sens X-Y sur des bras latéraux de saillies (33) et de creux (32) se mettant en prise les unes dans les autres sur le rail d'alimentation (4) et sur les modules connectés au bus (2).

4. Système selon la revendication précédente, **caractérisé en ce que** les électrodes formées perpendiculairement au plan du rail de support dans le sens X-Y sur les bras latéraux des saillies et des creux se mettant en prise les unes dans les autres sur le rail d'alimentation et sur les modules connectés au bus sont disposées sur une largeur différente sur l'axe Z perpendiculairement au rail de support afin de compenser les imprécisions de positionnement.

5. Système selon la revendication précédente, **caractérisé en ce que** les conducteurs en microbande sur le rail d'alimentation (4) ont une largeur variable sur l'axe Y dans le sens d'extension principal.

6. Système selon la revendication précédente, **caractérisé en ce qu'**il comporte le dispositif de commande conçu pour réguler le système en fonction du nombre de modules connectés au bus posés sur le rail de support.

7. Système selon la revendication précédente, **caractérisé en ce qu'**il comporte le dispositif de commande conçu pour déterminer le nombre des modules connectés au bus posés sur le rail de support à partir d'au moins un paramètre physique déterminable et de réguler le système en fonction du nombre de modules connectés au bus posés sur le rail de support et/ou **en ce qu'**il comporte le dispositif de commande conçu pour déterminer la localisation absolue des modules connectés au bus posés sur le rail de support.

8. Système selon l'une des revendications précédentes, **caractérisé en ce qu'**il comporte un module de portail (13) et **en ce que** le module de portail est de préférence muni du dispositif de commande, le module de portail (13) étant de préférence connecté au rail d'alimentation (4) par une ou plusieurs lignes électriques ou câbles et connecté à l'inductance ou à la capacité sur le rail d'alimentation.

9. Système selon l'une des revendications précédentes, **caractérisé en ce que** le module de portail (13) comporte les éléments électriques et/ou électroniques nécessaires à la réalisation d'une unité émettrice ou d'un dispositif émetteur-récepteur combiné et/ou **en ce que** plusieurs des rails d'alimentation sont raccordés au module de portail et leurs interfaces de transmission de données et d'énergie sont connectées entre elles au moyen d'une liaison câblée.

10. Procédé pour faire fonctionner un système selon l'une des revendications 6 à 8 ou 9 en faisant référence aux revendications 6 à 8, **caractérisé en ce que** le dispositif de commande détermine le nombre de modules connectés au bus posés sur le rail de support à partir d'au moins un paramètre physique déterminable lors de la transmission de l'énergie et/ou des données et **en ce que** le système est régulé en fonction du nombre de modules connectés au bus posés sur le rail de support.

11. Procédé pour faire fonctionner un système selon l'une des revendications 6 à 8 ou 9 en faisant référence aux revendications 6 à 8, **caractérisé en ce que** le dispositif de commande détermine la localisation absolue des modules connectés au bus posés sur le rail de support.

# Figur 1

Figur 2

Figur 3

## Figur 4

# Figur 5

## Figur 6

## Figur 7

## Figur 8

Figur 9

Figur 10

Figur 11

Figur 12

Figur 13

## Figur 14a

# Figur 14b

Figur 15

Figur 16

Figur 17

# Figur 18

Figur 19

# Figur 20

# Figur 21

Figur 22

# Figur 23

Fig. 24

**Fig. 25**

Fig. 26

Fig. 27

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10203765 B4
- DE 10026174 A1
- US 20010024888 A1
- EP 1885085 A1